# EUROPÄISCHE PATENTSCHRIFT

(11) **EP 3 224 930 B1**
(45) Veröffentlichungstag und Bekanntmachung des Hinweises auf die Patenterteilung: **29.03.2023**
(21) Anmeldenummer: 15775178.5
(22) Anmeldetag: 02.10.2015
(51) Int. Cl.: H02K 3/42, H02K 5/04

(54) **ELEKTRISCHE MASCHINE MIT REDUZIERTEM STREUFLUSS DURCH GEHÄUSE**
ELECTRIC MACHINE HAVING REDUCED STRAY FLUX THROUGH A HOUSING
MACHINE ÉLECTRIQUE AVEC UN FLUX DE DISPERSION RÉDUIT PAR LE CARTER

(30) Priorität: 25.11.2014 DE 102014223959
(43) Veröffentlichungstag der Anmeldung: 04.10.2017
(73) Patentinhaber: Robert Bosch GmbH, 70442 Stuttgart (DE)
(72) Erfinder: REITER, Jochen, 71336 Waiblingen (DE)
(86) Internationale Anmeldenummer: PCT/EP2015/072805
(87) Internationale Veröffentlichungsnummer: WO 2016/083000

(56) Entgegenhaltungen:
- JP-A- S58 103 847
- US-A- 3 749 953
- US-A- 3 901 484
- US-A- 5 175 460
- US-A1- 2012 206 022

## Beschreibung

Elektrische Maschine mit reduziertem Streufluss durch Gehäuse nach dem Oberbegriff des Anspruchs 1. Eine solche elektrische Maschine ist beispielsweise aus der US 2012/0206022 A1 bekannt.

### Gebiet der Erfindung

Die Erfindung betrifft eine elektrische Maschine, beispielsweise einen elektrischen Motor für ein Fahrzeug.

### Hintergrund der Erfindung

Asynchronmaschinen umfassen in der Regel einen Stator, dessen Wicklungen über Wickelköpfe an den Enden des Stators geschlossen werden, und einen Rotor mit einem Rotorkäfig, dessen Kurzschlussstäbe mit Kurschlussringen an den Enden des Rotors miteinander elektrisch verbunden sind und in dem durch den Stator elektromagnetische Felder induziert werden können, die beispielsweise den Rotor in Drehung versetzen können, wenn am Stator eine Wechselspannung angelegt wird.

Stator und Rotor werden normalerweise von einem mehrteiligen Gehäuse umschlossen, das den Stator trägt und in dem der Rotor in einem Lagerschild gelagert ist. Das Gehäuse ist in erster Linie nach mechanischen und Kostengesichtspunkten, aber nicht nach Gesichtspunkten unerwünschten magnetischen Streuflusses konzipiert. Dadurch kann die Maschine eine erhöhte Streuinduktivität aufweisen.

Die DE 2009 046 192 A1 zeigt beispielsweise einen Kraftfahrzeuggenerator mit einem Lagerschild, der Luftdurchgangsöffnungen aufweist, die sich in axialer Richtung erstrecken.

### Offenbarung der Erfindung

Ausführungsformen der vorliegenden Erfindung können in vorteilhafter Weise ermöglichen, den magnetischen Streufluss einer elektrischen Maschine im Bereich eines die Wickelköpfe umgebenden Gehäuses zu reduzieren.

Die Erfindung betrifft eine elektrische Maschine, beispielsweise eine Asynchronmaschine. Die elektrische Maschine kann ein Motor und/oder Generator sein, in etwa für ein Elektro- oder Hybridfahrzeug, wie etwa einem Pkw, Lkw oder Bus.

Ideen zu Ausführungsformen der vorliegenden Erfindung können unter anderem als auf den nachfolgend beschriebenen Gedanken und Erkenntnissen beruhend angesehen werden.

Erfindungsgemäß umfasst die elektrische Maschine einen Stator mit elektrischen Leitern zum Erzeugen eines Magnetfelds, die in einem Statorpaket aufgenommen sind und die über wenigstens einen Wickelkopf, der aus dem Statorpaket herausragt, elektrisch miteinander verbunden sind; einen in einem Stator drehbar um eine Drehachse gelagerten Rotor; und ein Gehäuse, in dem der Stator und der Rotor aufgenommen sind und in dem der Rotor gelagert ist, wobei das Gehäuse den Stator im Bereich des Wickelkopfes umschließt. Das Gehäuse weist im Bereich des Wickelkopfs eine Mehrzahl von länglichen Öffnungen auf, deren Länge in Umfangsrichtung bezüglich der Drehachse größer ist als deren Breite in radialer Richtung.

Das Gehäuse kann damit im Bereich der Wickelköpfe eine möglichst geringe magnetische Leitfähigkeit aufweisen, da die vom Stator und insbesondere vom Wickelkopf erzeugten Magnetfelder vor allem zwischen Stator und Rotor verlaufen sollen. Im Gegensatz dazu kann das Gehäuse (zumindest im Bereich der Wickelköpfe) eine möglichst hohe elektrische Leitfähigkeit aufweisen, um eine Abschirmung bezüglich elektromagnetischer Wellen bereitzustellen, die durch die elektrische Maschine erzeugt werden können.

Erfindunggemäß ist das Gehäuse aus aus Stahl hergestellt.

Das Gehäuse weist eine besondere Formgestaltung im Bereich des Wickelkopfes auf, wobei in tangentialer bzw. Umfangsrichtung langgestreckte schmale, beispielsweise schlitzförmige, Öffnungen als Flussbarrieren für Magnetfelder in dem Gehäuse vorgesehen sind. Diese Öffnungen können beispielsweise durch Stanzen erzeugt werden. Dadurch wird der radialen und axialen magnetischen Durchflutung des Gehäuses ein erhöhter magnetischer Widerstand entgegengesetzt, was zu einer effektiven Verringerung des magnetischen Streuflusses durch das Gehäuse führt.

Erfindunggemäß umfasst das Gehäuse ein Lagerschild, das stirnseitig die elektrische Maschine abdeckt; in dem Lagerschild sind die länglichen Öffnungen vorgesehen. Sie können durch Ausstanzen des Blechteils, beispielsweise während eines Tiefziehprozesses, erzeugt werden.

Erfindunggemäß sind die länglichen Öffnungen in einer Mehrzahl von Bahnen angeordnet sind. Die Aussparungen bzw. Öffnungen können im gesamten Bereich des Wickelkopfs vorgesehen sein. Die dadurch geringere Steifigkeit des Gehäuses kann in akustischer Hinsicht zu einer Absenkung der Eigenfrequenzen führen, was vorteilhaft sein kann.

Erfindunggemäß überlappen sich die länglichen Öffnungen zur Ausbildung von Flussbarrieren derart in einer Umfangsrichtung bezüglich der Drehachse, dass der magnetische Fluss im Gehäuse gezwungen ist, zwischen den Öffnungen ausschliesslich auf Wellenbahnen zu verlaufen, was die magnetische Leitfähigkeit des Gehäuses absenkt.

Gemäß einer Ausführungsform der Erfindung sind die länglichen Öffnungen radial außerhalb des Rotors angeordnet und/oder sind die länglichen Öffnungen in axialer Richtung außerhalb des Statorpakets angeordnet. Wenn die länglichen Öffnungen nur im Bereich des Wickelkopfes vorgesehen sind (und beispielsweise das Blechteil in der Umgebung der Achse bzw. eines dort befindlichen Lagers keine Öffnungen aufweist), kann der magnetische Streufluss unter Beibehaltung der mechanischen Eigenschaften des Blechteils effektiv reduziert werden.

Gemäß einer Ausführungsform der Erfindung weisen die länglichen Öffnungen eine Länge von 10 bis 40 mm und/oder eine Breite von 1 bis 5 mm auf und/oder beträgt das Verhältnis von Länge zu Breite der länglichen Öffnungen zwischen 5/1 und 10/1. Dies hat sich als vorteilhaft zur Reduzierung des magnetischen Streuflusses herausgestellt, wobei die elektrische Leitfähigkeit und die mechanische Belastbarkeit des Gehäuses nicht zu stark abgesenkt werden.

Gemäß einer Ausführungsform der Erfindung weisen die länglichen Öffnungen einen Abstand zwischen 2 bis 7 mm voneinander auf. Insbesondere in axialer Richtung sollte zwischen den Öffnungen nur soviel Stegbreite übrigbleiben, wie aus Festigkeitsgründen erforderlich ist, um die magnetische Leitfähigkeit möglichst weit abzusenken.

Es ist zu verstehen, dass die elektrische Maschine mehrere Wickelköpfe an beiden axialen Enden umfassen kann, bei denen allen das Gehäuse, wie oben oder unten beschrieben, mit länglichen Öffnungen zur Reduzierung des magnetischen Streuflusses versehen werden kann.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt einen schematischen Querschnitt durch eine elektrische Maschine gemäß einer Ausführungsform der Erfindung.
Fig. 2 zeigt einen Ausschnitt aus der Fig. 1.
Fig. 3 zeigt eine Draufsicht in axialer Richtung auf eine elektrische Maschine gemäß einer Ausführungsform der Erfindung.

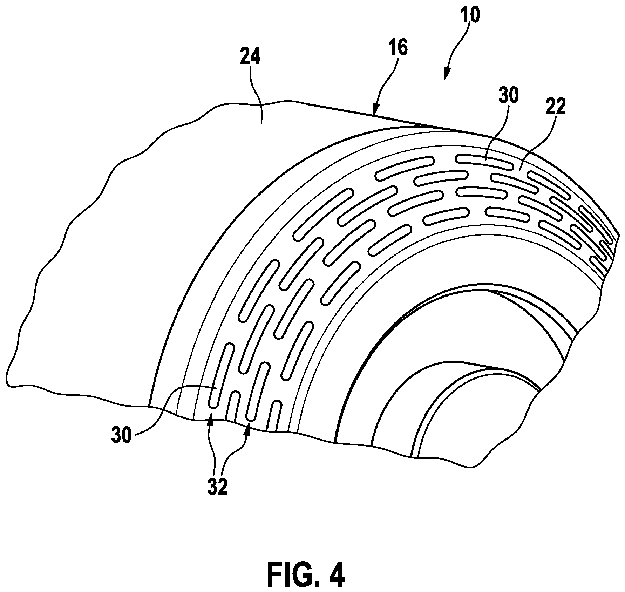

Fig. 4 zeigt eine perspektivische Teilansicht einer elektrischen Maschine gemäß einer Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

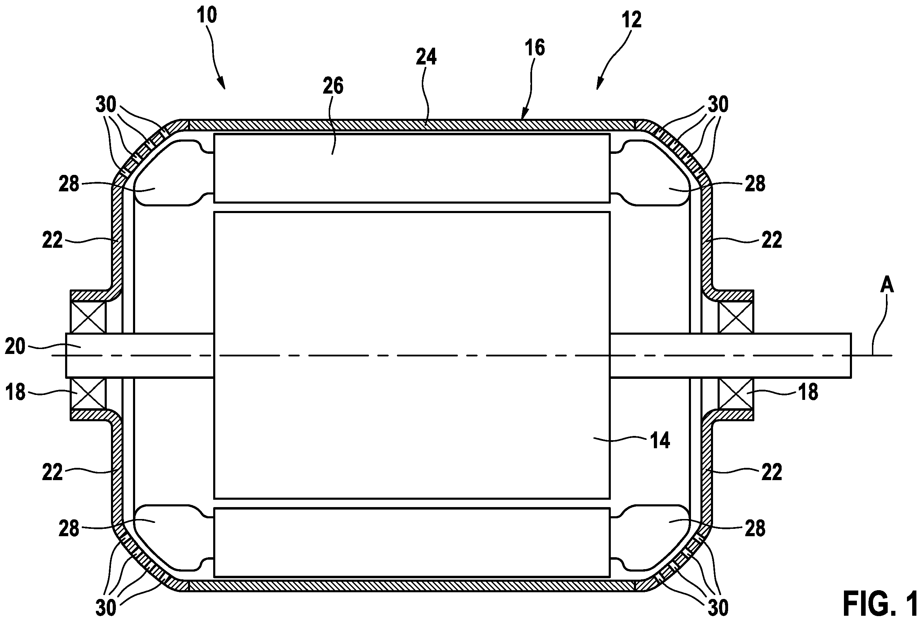

Fig. 1 zeigt eine Asynchronmaschine 10, die einen Stator 12, einen im Stator 12 rotierbar gelagerten Rotor 14 und ein Gehäuse 16 umfasst. Der Stator 12 ist am Gehäuse 16 befestigt, das wiederum ein Lager 18 bereitstellt, in dem der Rotor 14 mittels einer Welle 20 um eine Drehachse A gelagert ist. Das Gehäuse 16 weist mehrere Teile auf und umfasst zwei Blechteile bzw. Lagerbleche 22, die in Ihrer Mitte jeweils das Lager halten und den Stator 12 und den Rotor 14 topfartig umschließen. Die beiden Blechteile 22 sind auf ein zylinderförmiges Gehäuseteil 24 gesteckt, das den Stator 12 umschließt. Das Blechteil 22 und/oder das zylinderförmige Gehäuseteil 24 können aus Aluminium gefertigt sein.

Der Stator umfasst ein ringförmiges Statorpaket 26, das Wicklungen bzw. Leiter aufnimmt, die mittels Wickelköpfen 28, die an den axialen Enden (bezüglich der Achse A) des Stators 12 von dem Statorpaket 26 abstehen, miteinander elektrisch verbunden sind.

Im Bereich der Wickelköpfe 28, d.h. insbesondere radial außerhalb des Rotors 14 und axial außerhalb des Statorpakets 26, weisen die Blechteile 22 Öffnungen bzw. Löcher 30 auf, die dazu dienen, eine magnetische Leitfähigkeit des Gehäuses 16 in diesem Bereich herabzusetzen.

Die elektrische Maschine 10 kann beispielsweise in ein Getriebe integriert und von Öl umspült sein. Die Öffnungen 30 können dann zusätzlich als Durchtrittsöffnungen für Öl dienen.

Es ist auch möglich, dass die Öffnungen 30 als Durchtrittsöffnungen für Kühlluft verwendet werden.

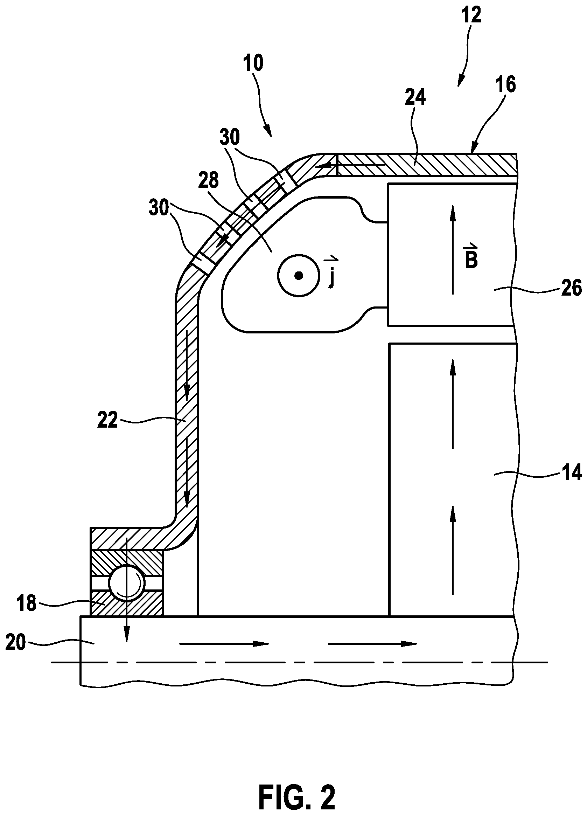

Wie aus der Fig. 2 hervorgeht, erzeugt der Strom *j* durch den Wickelkopf 28 ein Magnetfeld B, das unter anderem durch das Gehäuse 16 (das Blechteil 22), das

Lager 18, die Welle 20, den Rotor 14 und das Statorpaket 26 verläuft. Durch das Vermindern der magnetischen Leitfähigkeit des Blechteils 22 wird dieses Magnetfeld B in den Bereich des Rotors 14 und des Stators 12 gedrängt, und der Streufluss durch das Gehäuse 16 wird reduziert.

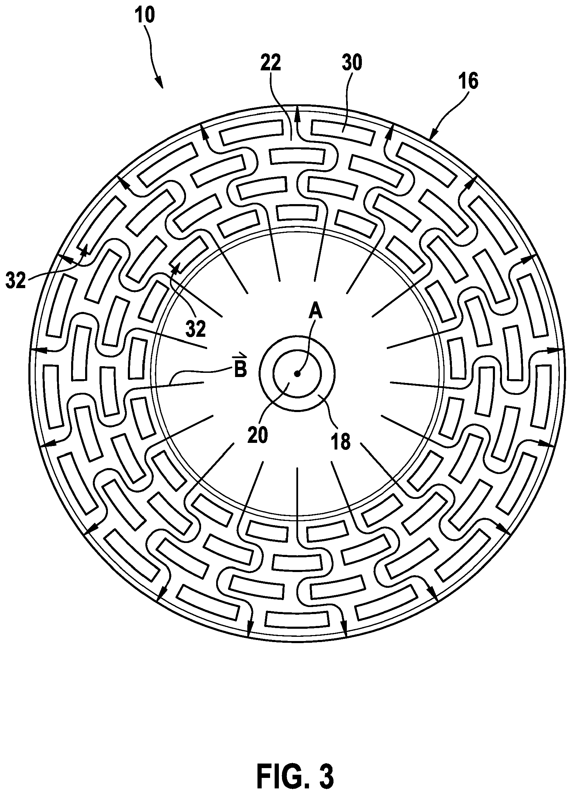

Die Fig. 3 zeigt das Blechteil 22 in Richtung der Achse A.

Die Öffnungen 30 sind länglich und umgeben die Achse A in mehreren Bahnen oder Ringen 32. Die Öffnungen 30 können längsgeschlitzt, oval, eckig oder rechteckig sein. Dadurch, dass sich die Öffnungen 30 verschiedener Bahnen 32 in Umfangsrichtung gesehen überlappen, wird der magnetische Umweg für das Magnetfeld B größer. Die in Umfangsrichtung bezüglich der Drehachse A gemessene Länge der Öffnungen 30 ist erfindungsgemäß größer als die in radialer Richtung bezüglich der Achse A gemessene Breite der Öffnungen 30.

Die Fig. 3 zeigt, dass das Blechteil 22 einen Wickelkopf 28 nutförmig umgeben kann, d.h., dass das Blechteil 22 im Bereich des Rotors 14 in axialer Richtung weiter innen verlaufen kann als radial weiter außen. Die länglichen Öffnungen 30 sind dabei lediglich an Stellen des Blechteils 22 angebracht, das den Wickelkopf 28 direkt umschließt.

Beispielsweise beträgt das Verhältnis der in Umfangsrichtung bezüglich der Achse A gemessenen Länge zur in radialer Richtung gemessenen Breite der Öffnungen 30 etwa 5/1 bis 10/1. Die Öffnungen 30 können eine Länge von etwa 10-40 mm, eine Breite von etwa 1-5 mm und einen Abstand von etwa 2-7 mm voneinander aufweisen.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Elektrische Maschine (10), umfassend:
einen Stator (12) mit elektrischen Leitern zum Erzeugen eines Magnetfelds, die in einem Statorpaket (26) aufgenommen sind und die über wenigstens einen Wickelkopf (28), der aus dem Statorpaket (26) herausragt, elektrisch miteinander verbunden sind;
einen in dem Stator (12) drehbar um eine Drehachse (A) gelagerten Rotor (14);
ein Gehäuse (16), in dem der Stator (12) und der Rotor (14) aufgenommen sind und in dem der Rotor (14) gelagert ist, wobei das Gehäuse (16) den Stator (12) im Bereich des Wickelkopfes (28) umschließt; wobei das Gehäuse (16) im Bereich des Wickelkopfes (28) eine Mehrzahl von länglichen Öffnungen (30) aufweist, deren Länge in Umfangsrichtung bezüglich der Drehachse (A) größer ist als deren Breite in radialer Richtung, wobei die länglichen Öffnungen (30) in einer Mehrzahl von um die Drehachse (A) des Rotors (14) verlaufenden Bahnen (32) angeordnet sind, wobei das Gehäuse ein Lagerschild (22) umfasst, das stirnseitig die elektrische Maschine (10) abdeckt, wobei die länglichen Öffnungen (30) im Lagerschild (22) vorgesehen sind, **dadurch gekennzeichnet, dass**
- das Gehäuse (16) aus Stahl hergestellt ist,
- sich die länglichen Öffnungen (30) verschiedener Bahnen (32) zur Ausbildung von Flussbarrieren für Magnetfelder derart in einer Umfangsrichtung bezüglich der Drehachse (A) überlappen, dass der magnetische Fluss im Gehäuse (16) gezwungen ist, zwischen den Öffnungen (30) ausschließlich auf Wellenbahnen zu verlaufen.

2. Elektrische Maschine (10) nach Anspruch 1, wobei das Lagerschild (22) als Blechteil ausgebildet ist.

3. Elektrische Maschine (10) nach einem der vorhergehenden Ansprüche, wobei die länglichen Öffnungen (30) radial außerhalb des Rotors (14) angeordnet sind; und/oder
wobei die länglichen Öffnungen (30) in axialer Richtung außerhalb des Statorpakets (26) angeordnet sind.

4. Elektrische Maschine (10) nach einem der vorhergehenden Ansprüche, wobei die länglichen Öffnungen (30) eine Länge von 10 bis 40 mm und/oder eine Breite von 1 bis 5 mm aufweisen.

5. Elektrische Maschine (10) nach einem der vorhergehenden Ansprüche, wobei das Verhältnis von Länge zu Breite der länglichen Öffnungen (30) zwischen 5/1 und 10/1 beträgt.

6. Elektrische Maschine (10) nach einem der vorhergehenden Ansprüche, wobei die länglichen Öffnungen (30) einen Abstand zwischen 2 bis 7 mm voneinander aufweisen.

7. Elektrische Maschine (10) nach einem der vorhergehenden Ansprüche, wobei die elektrische Maschine eine Asynchronmaschine ist.

## Claims

1. Electric machine (10), comprising:
a stator (12) having electric conductors for generating a magnetic field, which are accommodated in a stator core (26) and which are electrically connected to one another via at least one winding head (28), which projects out of the stator core (26);
a rotor (14) mounted in the stator (12) such that it can rotate about an axis of rotation (A);
a housing (16), in which the stator (12) and the rotor (14) are accommodated and in which the rotor (14) is mounted, wherein the housing (16) encloses the stator (12) in the region of the winding head (28); wherein in the region of the winding head (28), the housing (16) has a plurality of elongated openings (30), of which the length in the circumferential direction with respect to the axis of rotation (A) is greater than the width thereof in the radial direction, wherein the elongated openings (30) are arranged in a plurality of tracks (32) extending around the axis of rotation (A) of the rotor (14), wherein the housing comprises a bearing shield (22), which covers the electric machine (10) at the end, wherein the elongated openings (30) are provided in the bearing shield (22),
**characterized in that**
- the housing (16) is produced from steel,
- to form flux barriers for magnetic fields, the elongated openings (30) of various tracks (32) overlap in a circumferential direction with respect to the axis of rotation (A) in such a way that the magnetic flux in the housing (16) is forced to run exclusively on wavy paths between the openings (30).

2. Electric machine (10) according to Claim 1, wherein the bearing shield (22) is formed as a sheet metal part.

3. Electric machine (10) according to one of the preceding claims,
wherein the elongated openings (30) are arranged radially outside the rotor (14); and/or
wherein the elongated openings (30) are arranged in the axial direction outside the stator core (26).

4. Electric machine (10) according to one of the preceding claims,
wherein the elongated openings (30) have a length of 10 to 40 mm and/or a width of 1 to 5 mm.

5. Electric machine (10) according to one of the preceding claims,
wherein the ratio of length to width of the elongated openings (30) is between 5/1 and 10/1.

6. Electric machine (10) according to one of the preceding claims,
wherein the elongated openings (30) have a spacing of between 2 and 7 mm from one another.

7. Electric machine (10) according to one of the preceding claims,
wherein the electric machine is an asynchronous machine.

## Revendications

1. Machine électrique (10), comprenant :
un stator (12) pourvu de conducteurs électriques permettant de générer un champ magnétique, qui sont logés dans un paquet de stator (26) et qui sont électriquement reliés ensemble par l'intermédiaire d'au moins une tête d'enroulement (28) qui fait saillie du paquet de stator (26) ;
un rotor (14) monté rotatif autour d'un axe de rotation (A) dans le stator (12) ;
un carter (16) dans lequel sont logés le stator (12) et le rotor (14) et dans lequel est monté le rotor (14), le carter (16) entourant le stator (12) au niveau de la tête d'enroulement (28) ; dans laquelle le carter (16) présente au niveau de la tête d'enroulement (28) une pluralité d'orifices allongés (30) dont la longueur dans la direction circonférentielle par rapport à l'axe de rotation (A) est supérieure à leur largeur dans la direction radiale,
dans laquelle les orifices allongés (30) sont disposés dans une pluralité de trajectoires (32) s'étendant autour de l'axe de rotation (A) du rotor (14), le carter comprenant un flasque (22) qui recouvre la machine électrique (10) sur la face frontale, les orifices allongés (30) étant prévus dans le flasque (22),
**caractérisée en ce que**
- le carter (16) est fabriqué en acier,
- afin de réaliser des barrières de flux pour des champs magnétiques, les orifices allongés (30) de différentes trajectoires (32) se chevauchent dans une direction circonférentielle par rapport à l'axe de rotation (A) de telle sorte que le flux magnétique dans le carter (16) est contraint de passer entre les orifices (30) exclusivement sur des trajectoires ondulées.

2. Machine électrique (10) selon la revendication 1, dans laquelle le flasque (22) est réalisé sous la forme d'une pièce en tôle.

3. Machine électrique (10) selon l'une quelconque des revendications précédentes,
dans laquelle les orifices allongés (30) sont disposés radialement à l'extérieur du rotor (14) ; et/ou
dans laquelle les orifices allongés (30) sont disposés dans la direction axiale à l'extérieur du paquet de stator (26).

4. Machine électrique (10) selon l'une quelconque des revendications précédentes, dans laquelle les orifices allongés (30) présentent une longueur de 10 à 40 mm et/ou une largeur de 1 à 5 mm.

5. Machine électrique (10) selon l'une quelconque des revendications précédentes, dans laquelle le rapport entre la longueur et la largeur des orifices allongés (30) est compris entre 5/1 et 10/1.

6. Machine électrique (10) selon l'une quelconque des revendications précédentes, dans laquelle les orifices allongés (30) présentent une distance entre 2 et 7 mm les uns par rapport aux autres.

7. Machine électrique (10) selon l'une quelconque des revendications précédentes, dans laquelle la machine électrique est une machine asynchrone.
